(19) Europäisches Patentamt
European Patent Office
Office européen des brevets

(11) EP 1 530 120 A1

(12) **EUROPEAN PATENT APPLICATION**

(43) Date of publication:
**11.05.2005 Bulletin 2005/19**

(51) Int Cl.[7]: **G06F 3/00**

(21) Application number: **04026588.6**

(22) Date of filing: **09.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **10.11.2003 JP 2003380097**

(71) Applicant: **ALPS ELECTRIC CO., LTD.**
**Tokyo 145-8501 (JP)**

(72) Inventor: **Matsumoto, Ken**
**Ota-ku, Tokyo 145-8501 (JP)**

(74) Representative: **Klunker . Schmitt-Nilson . Hirsch**
**Winzererstrasse 106**
**80797 München (DE)**

(54) **Force-feedback input device**

(57) In a force-feedback input device, when a cursor (C) moves on a line (M1) parallel to a line (M2) between a center (O1) of a first button (B1) and a center (O2) of a second button (B2), two areas are determined on the line. One is an area between a first position, which corresponds to the center (O1) of the first button (B1), and the mid-line (Y-Y) between the first and second buttons (B1,B2). The other is an area between a second position, which corresponds to the center (O2) of the second button (B2) and the mid-line (Y-Y) between the first and second buttons (B1,B2). In these areas, first and second external-force generation portions are controlled so that the direction of an attractive force (Fy) exerted on an operating portion is biased towards a mid-point (O) between the first and -second buttons (B1,B2) as the cursor (C) moves closer to the mid-line (Y-Y) between the two buttons (B1,B2).

FIG. 5

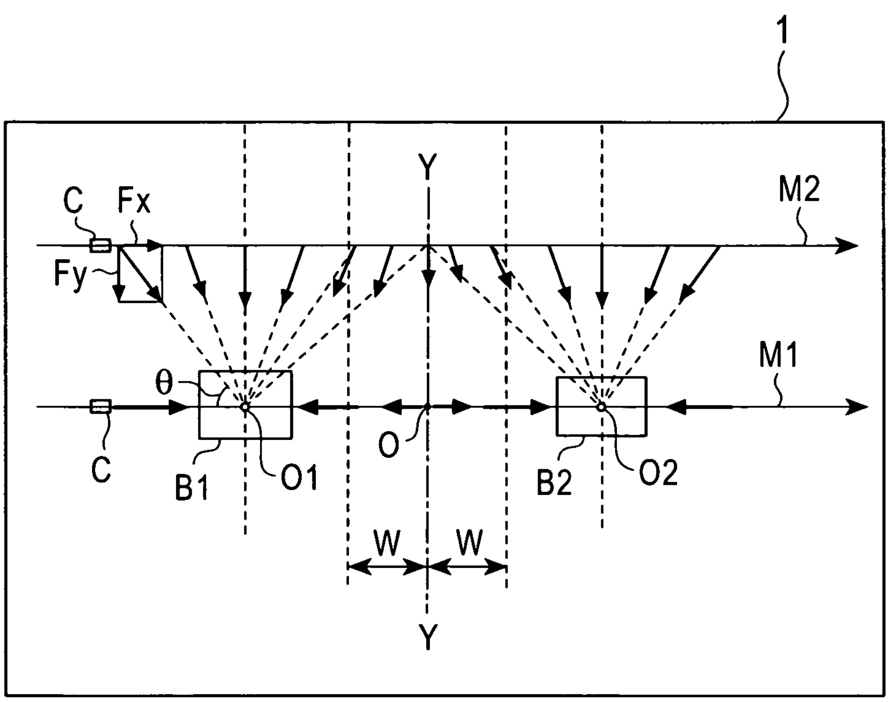




Printed by Jouve, 75001 PARIS (FR)

## Description

BACKGROUND OF THE INVENTION

1. Field of the Invention

The present invention relates to a force-feedback input device used for, for example, car navigation systems and, in particular, to an improvement in the operational sensation of an input device having a function of automatically attracting a cursor into a position of a menu-selection button displayed on display means in order to facilitate the selection of a desired button.

2. Description of the Related Art

Input devices are known in which display means displays menu-selection buttons and a cursor, and in which input means allows an operator to select a desired menu by moving the cursor to the display position of the desired button among the menu-selection buttons. In addition, some input means have a function that automatically attracts a cursor to the displayed position of the button to facilitate a movement of the cursor to the displayed button position.

Fig. 9 is a block diagram of a known input device having an automatic cursor attraction function. This input device includes input means 101 which is operated by an operator and detects the amount of movement by itself, display means 102 which displays a cursor moved by the input means 101 and input points (buttons), position detecting means 103 which finds the coordinates of the cursor displayed on the display means 102 from the amount of movement of the input means 101, and driving means 104 for providing force-feedback to the input means 101 in accordance with the coordinates of the position of the cursor. The input means 101 includes a rolling ball 105 which moves on a desk while rotating, and rotation-angle detecting means 106 and 107 disposed in accordance with the x-axis and y-axis directions of the display means 102 in order to detect the amount of rotation of the rolling ball 105 in the x-axis direction and in the y-axis direction. The driving means 104 includes a driving unit 108 composed of motors 108a and 108b to drive the rolling ball 105 and a driving signal generation unit 109 for generating a driving signal to drive the driving unit 108 in accordance with a signal from the position detecting means 103 (refer to, for example, Japanese Examined Patent Application Publication No. 07-120247).

As shown in Fig. 10C, the driving signal generation unit 109 pre-stores a relationship among a relative distance between a cursor and an input point, a relative moving direction of the cursor towards the input point, and a driving signal supplied to the driving unit 108. As shown in Fig. 10A, when the cursor is moved towards the input point by the operation of the input means 101 and the cursor enters the range of $x1 \leq x \leq x2$, the driving signal "+1" shown in Fig. 10C is supplied to the driving unit 108 from the driving signal generation unit 109. Accordingly, a driving force is provided to the rolling ball 105 so that a sensation is provided to the input means 101 as if it is attracted by the input point, as shown in Fig. 10B, and the cursor is attracted to the input point. In contrast, when the cursor is moved away from the input point by the operation of the input means 101 and the cursor enters the range of $x3 \leq x \leq x4$, the driving signal "-1" shown in Fig. 10C is supplied to the driving unit 108 from the driving signal generation unit 109. Accordingly, a resistive force is provided to the rolling ball 105 so that a sensation is provided to the input means 101 as if it is pulled back by the input point.

Therefore, an input device of the above-described structure facilitates the operation for a cursor to move on the desired input point. For example, this input device facilitates the menu selection displayed on the display means 102.

In the above-described known example, it is designed such that, when the cursor moves into a predetermined area for an input point, the cursor is attracted to the display area of the input point by applying a driving signal to the driving unit 108. In addition, in some of the known force-feedback input devices, a cursor is attracted to the closest input point even when the cursor is placed at any location outside the display area of the input point. That is, the input devices have an infinite attractive area.

Additionally, in the above-described known example, the cursor is not attracted to the center of the input point. However, some of the known force-feedback input devices move a cursor into the center of the input point.

Furthermore, in the above-described known example, a mouse is used as the input means 101. However, some of the known force-feedback input devices employ a joystick instead of a mouse.

As described in Japanese Examined Patent Application Publication No. 07-120247, a plurality of menu selection buttons (input points) is normally disposed on display means in various arrangements. However, the technology described in the publication discloses no method for controlling an attractive force when a plurality of buttons is displayed on display means, in particular, when the buttons are closely located to each other. That is, the strength of the attractive force is controlled based on only the distance between a cursor and one of the buttons. Therefore, when the technology described in that publication is applied to an actual device, and a cursor is moved from the display position of one button or the vicinity of the button to the display position of another button or the vicinity of the button, impact force occurs in the input means, and therefore, the operability of the input means becomes degraded or the cursor cannot be smoothly moved in the desired direction, which is a problem.

In other words, when a plurality of buttons is displayed on display means, a cursor is attracted in the direction towards the closest displayed button of the cursor. Accordingly, if the closest button changes to another button and the direction of the attractive force is switched while the cursor is moving, the strength of the attractive force abruptly changes. Therefore, unless the strength of the attractive force exerted on the input means is reduced before and after the change, a large impact force occurs in the input means.

As shown in Fig. 11, two buttons B1 and B2 are displayed in the x-axis direction of the display means 102. The attractive force of a cursor C is determined based on only a distance between the cursor C and the button. For example, the strength of the attractive force is constant. When the cursor C moves from the left of the button B1 to the right of the button B2 on a line M1 between a center O1 of the button B1 to a center O2 of the button B2, a component force Fx of the attractive force in the x-axis direction and a component force Fy of the attractive force in the y-axis direction, as shown in Fig. 12A, are provided to the input means 101 by two driving means, for example, the motors 108a and 108b, disposed along the x-axis direction and the y-axis direction. If the cursor C moves from the left of the button B1 to the right of the button B2 on a line M2 parallel to the line M1, a component force Fx of the attractive force in the x-axis direction and a component force Fy of the attractive force in the y-axis direction, as shown in Fig. 12B, are provided to the input means 101 by the two driving means.

As can be seen from Figs. 12A and 12B, when an attractive force exerted on the cursor C is controlled only by a distance between the cursor C and a button regardless of the displayed position of the cursor C with respect to the buttons B1 and B2, the direction of a component force Fx of the attractive force in the x-axis direction is reversed at the time when the cursor C passes across the mid-position between the center O1 of the button B1 and the center O2 of the button B2, that is, when the cursor C passes across a center line Y-Y between the buttons in Fig. 11. Accordingly, the strength of the attractive force abruptly changes and, thus, an unnatural click sensation occurs from button to button and causes an operator to feel an unpleasant sensation.

To solve such a problem, as shown in Fig. 13, when the cursor C moves on a line M1 or a line M2 parallel to the line M1 in an area between the center of the button B1 and a mid-position between the two buttons B1 and B2 and in an area between the center of the button B2 and the mid-position between the two buttons B1 and B2, one possible solution is that the two driving means are controlled so that the absolute value of an attractive force F exerted on the input means 101 decreases as the cursor C moves closer to the mid-position between the two buttons B1 and B2. According to this control method, as can be seen from the comparison between Figs. 12A and 12B and Figs. 14A and 14B, the component force Fx of the attractive force in the x-axis direction exerted on the input means 101 moderately changes even when the direction of the attractive force F abruptly changes at the mid-position between the center O1 of the button B1 and the center O2 of the button B2. As a result, no unnatural click sensation occurs between the button B1 and the button B2.

However, as can be seen from the comparison between Fig. 12B and Fig. 14B, this control method has a drawback that the cursor C cannot move stably on the line M2 parallel to the line M1 since the component force Fy of the attractive force in the y-axis direction significantly changes during the move.

## SUMMARY OF THE INVENTION

Accordingly, it is an object of the present invention to provide a force-feedback input device generating an attractive force that allows a cursor to stably move even when a plurality of buttons is displayed on the display means.

According to the present invention, a force-feedback input device includes display means for displaying a cursor and first and second buttons, an operating portion operated by an operator, a detecting portion for detecting an operational state of the operating portion, external-force generation portions, and control means. The external-force generation portions provide the operating portion with an attractive force composed of a first external force in the direction substantially parallel to the arrangement direction of the first and second buttons and a second external force in the direction substantially orthogonal to the arrangement direction of the first and second buttons. The control means controls the display of the cursor based on a detection signal from the detecting portion and driving of the external-force generation portions so as to provide the operating portion with an attractive force to the buttons based on the positional relationship between the cursor and the buttons. In particular, the control means controls driving of the external-force generation portions such that the attractive force decreases while the rate of decrease of the second external force becomes smaller than the rate of decrease of the first external force as the distance between the cursor and a borderline between a first attractive area and a second attractive area appearing in the vicinities of the adjacent first and second buttons becomes smaller.

As described above, when the first and second buttons are displayed on the display means, driving of the external-force generation portions is controlled such that the rate of decrease of the second external force becomes smaller than the rate of decrease of the first external force as the distance between the cursor and a borderline between a first attractive area and a second attractive area appearing in the vicinities of the adjacent first and second buttons becomes smaller. Consequently, even when the direction of the attractive force abruptly changes at a mid-position between the buttons, the change in strength of the second external force exerted on the operating portion can be moderate and, therefore, no unnatural click sensation occurs between the buttons and the cursor can be moved stably.

Preferably, in the force-feedback input device, the control means decreases only the first external force as the distance between the borderline and the cursor decreases.

As described above, since only the first external force is decreased as the distance between the borderline and the cursor decreases, a change in the strength of the second external force exerted on the operating portion can be eliminated. Therefore, no unnatural click sensation occurs between the buttons and the cursor can be moved stably.

BRIEF DESCRIPTION OF THE DRAWINGS

Fig. 1 is a block diagram of a force-feedback input device according to an embodiment of the present invention;
Fig. 2 is a side cross-sectional view of input means according to the embodiment;
Fig. 3 is a top plan cross-sectional view of the input means according to the embodiment;
Figs. 4A, 4B, and 4C are diagrams explaining the operation of the force-feedback input device according to the embodiment;
Fig. 5 is a vector diagram illustrating the change in an attractive force exerted on the input means when two buttons are displayed on display means of the force-feedback input device according to the embodiment;
Fig. 6 is a schematic diagram explaining a scheme for controlling the attractive force in the input means of the force-feedback input device according to the embodiment;
Figs. 7A and 7B are graph charts illustrating a change in an attractive force exerted on the input means when two buttons are displayed on display means of the force-feedback input device according to the embodiment;
Fig. 8 is a schematic diagram of an attractive area set on the display means;
Fig. 9 is a block diagram of a known force-feedback input device;
Figs. 10A, 10B, and 10C are diagrams explaining the operation of the known force-feedback input device;
Fig. 11 is a vector diagram illustrating a change in an attractive force exerted on input means when two buttons are displayed on display means in a first example of a known force-feedback input device;
Figs. 12A and 12B are graph charts illustrating the change in an attractive force exerted on the input means when two buttons are displayed on the display means in the first example of a known force-feedback input device;
Fig. 13 is a vector diagram illustrating a change in an attractive force exerted on input means when two buttons are displayed on display means in a second example of a known force-feedback input device; and
Figs. 14A and 14B are graph charts illustrating the change in an attractive force exerted on the input means when two buttons are displayed on the display means in the second example of a known force-feedback input device.

DESCRIPTION OF THE PREFERRED EMBODIMENTS

Embodiments of a force-feedback input device according to the present invention will be described below with reference to Figs. 1 to 8. Fig. 1 is a block diagram of a force-feedback input device according to an embodiment of the present invention. Fig. 2 is a side cross-sectional view of input means according to an embodiment. Fig. 3 is a top plan cross-sectional view of the input means according to the embodiment. Figs. 4A, 4B, and 4C are diagrams explaining the operation of the force-feedback input device according to the embodiment. Fig. 5 is a vector diagram illustrating a change in an attractive force exerted on the input means when two buttons are displayed on display means. Fig. 6 is a schematic diagram explaining a scheme for controlling the attractive force in the input means according to the embodiment. Figs. 7A and 7B are graph charts illustrating the change in an attractive force exerted on the input means when two buttons are displayed on display means. Fig. 8 is a schematic diagram of an attractive area set on the display means.

As shown in Fig. 1, a force-feedback input device according to the embodiment includes display means 1 for displaying required images including a cursor C and a plurality of buttons B1 to Bn, input means 2 for moving the cursor C displayed on the display means 1 and selecting one of the buttons B1 to Bn displayed on the display means 1, and control means 3 for controlling the display means 1 and the input means 2.

The display means 1 may be any well-known display device. However, when the input device according to the present invention is used for car navigation systems and mobile game machines, a liquid crystal display device is preferably used among others since the manufacturing cost and the size can be reduced. The coordinates of the cursor C and the buttons B1 to Bn are determined assuming that the horizontal direction and the vertical direction of the display means 1 are the x-axis and the y-axis, respectively.

As shown in Fig. 1, the input means 2 includes a mechanism portion 21 having a pivoted lever 21a, an operating portion 22 attached to a top end of the pivoted lever 21a, the first and second external force generation portions 23 and 24 for providing an attractive force to the operating portion 22 via the pivoted lever 21a, and first and second detecting portions 25 and 26 for detecting the direction and the amount of operational movement of the pivoted lever 21a.

As shown in Figs. 2 and 3, the mechanism portion 21 includes the pivoted lever 21a, a casing 31, a lever-holding shaft 32, and a swing arm 33, both of which are rotatably supported by the casing 31. The lever-holding shaft 32 and the swing arm 33 are orthogonally disposed to each other. The pivoted lever 21a is attached to the lever-holding shaft 32 so that the pivoted lever 21a can rotate only in the rotational direction of the swing arm 33. Reference numeral 21b in the drawing denotes a central shaft of pivotal movement of the pivoted lever 21a. On the other hand, the swing arm 33 has a long slit 33a so that a lower end of the pivoted lever 21a passes through. The width of the long slit 33a is slightly greater than the diameter of the lower end of the pivoted lever 21a. When the pivoted lever 21a swings in the rotational direction of the lever-holding shaft 32, namely, in the direction X-X, the lower end of the pivoted lever 21a can freely swing in the long slit 33a. In contrast, when the pivoted lever 21a swings in the rotational direction of the central shaft 21b, namely, in the direction Y-Y, the swing arm 33 can swing along with the pivoted lever 21a.

Thus, the pivoted lever 21a can swing in any direction about the lever-holding shaft 32 and the central shaft 21b. The lever-holding shaft 32 rotates by an amount of rotation in proportion to an amount of pivotal movement of the pivoted lever 21a in the X-X direction. The swing arm 33 rotates by an amount of rotation in proportion to an amount of pivotal movement of the pivoted lever 21a in the Y-Y direction.

The operating portion 22 has a shape and a size that an operator can manipulate. A selection switch 22a for selecting one of the buttons B1 to Bn displayed on the display means 1 is disposed as a part of the operating portion 22.

The first external-force generation portion 23 is coupled with the lever-holding shaft 32 and drives the operating portion 22 so that the operating portion 22 moves in the x-axis direction of the display means 1. In contrast; the second external-force generation portion 24 is coupled with the swing arm 33 and drives the operating portion 22 so that the operating portion 22 moves in the y-axis direction of the display means 1. An electric actuator, such as a motor and a solenoid, may be used as the first and second external-force generation portions 23 and 24. When a linear actuator, such as a linear motor and a solenoid, is used as the first and second external-force generation portions 23 and 24, an appropriate power transfer mechanism is disposed between the first external-force generation portion 23 and the lever-holding shaft 32 and between the second external-force generation portion 24 and the swing arm 33 so that linear motion of the first and second external-force generation portions 23 and 24 is converted to rotary motion of the lever-holding shaft 32 and the swing arm 33, respectively.

The first and second detecting portions 25 and 26 detect rotational directions and amounts of rotational movement of the rotational shafts and convert them to electric signals in accordance with the detected result in order to output them. For example, a rotary encoder or a rotary variable resistor may be used as the first and second detecting portions 25 and 26. The rotational shaft of the first detecting portion 25 is coupled with the lever-holding shaft 32 and the rotational shaft of the second detecting portion 26 is coupled with the swing arm 33.

As shown in Fig. 1, the control means 3 includes an input unit 41, an arithmetic unit 42, a storage unit 43, first and second driver circuits 44 and 45, a third driver circuit 46, and a CPU 47. The input unit 41 receives a first detection signal a output from the first detecting portion 25, a second detection signal b output from the second detecting portion 26, and a switching signal c output from the selection switch 22a. The arithmetic unit 42 calculates a moving direction and moving distance of the cursor C based on the first and second detection signals a and b, and driving signals d and e for driving the first and second external-force generation portions 23 and 24 based on the first and second detection signals a and b. Also, the arithmetic unit 42 switches display screens based on the switching signal c. The storage unit 43 stores formulae and coefficients for the calculation and the coordinates of the centers of the buttons B1 to Bn. The first and second driver circuits 44 and 45 drive the first and second external-force generation portions 23 and 24 by outputting external-force generation driving electric power g and h in accordance with the driving signals d and e output from the arithmetic unit 42. The third driver circuit 46 drives the display means 1 by outputting display-means driving electric power i in accordance with a display-means driving signal f output from the arithmetic unit 42. The CPU 47 controls the above-described units 41 to 46.

As shown in Fig. 4A, when the operating portion 22 is operated, the arithmetic unit 42 calculates a moving direction and moving distance of the cursor C displayed on the display means 1 based on the first and second detection signals a and b and formulae and coefficients stored in the storage unit 43, and then causes the cursor C displayed on the display means 1 to move in the direction corresponding to the operational direction of the operating portion 22 by a distance corresponding to the operational amount of the operating portion 22 based on the calculation result.

Additionally, as shown in Fig. 4B, the arithmetic unit 42 finds a button displayed at the closest position from the cursor C based on the coordinates (x, y) of the current position of the cursor C and the coordinates (x1, y1) of the center of each of the buttons B1 to Bn. That is, in the example shown in Fig. 4B, a button B5 is found.

The arithmetic unit 42 then drives the first and second external-force generation portions 23 and 24 so as to attract the cursor C to the center of the found button.

In order to attract the cursor C to the center of each of the buttons B1 to Bn, for example, an attractive force F provided to the operating portion 22 by the first and second external-force generation portions 23 and 24 is determined as shown in Fig. 4C in accordance with the distance from the cursor C to the center of each of the buttons B1 to Bn.

As shown in Fig. 5, when the cursor C moves on a line M2 parallel to a line M1 between a center O1 of the button B1 and a center O2 of the button B2, in an area where the attractive force is controlled to decrease, that is, in areas W that appear on both sides of a mid-position Y-Y between the two buttons B1 and B2, the first and second external-force generation portions 23 and 24 are controlled so that only a component force Fx of the attractive force F in the x-axis direction is decreased and a component force Fy of the attractive force F in the y-axis direction is not decreased. Consequently, when the cursor C moves on the line M2 from either of the buttons B1 and B2 to the mid-position Y-Y between the buttons B1 and B2, the component force Fx of the attractive force F in the x-axis direction is decreased in accordance with the amount of movement and becomes zero at the mid-position Y-Y between the buttons B1 and B2, while the component force Fy of the attractive force F in the y-axis direction remains non-zero at the mid-position Y-Y between the buttons B1 and B2.

Thus, in the force-feedback input device according to the embodiment, the first and second external-force generation portions 23 and 24 are controlled so that only the component force Fx of the attractive force F exerted on the operating portion 22 in the x-axis direction is decreased as the cursor C moves closer to the mid-position Y-Y between the two buttons B1 and B2, while the component force Fy of the attractive force F in the y-axis direction is not decreased. Accordingly, as can be seen from the comparison between Figs. 12A and 12B and Figs. 7A and 7B, even when the cursor C moves from the left of the button B1 to the right of the button B2 on the line M1 between the center O1 of the button B1 to the center O2 of the button B2, and even when the cursor C moves from the left of the button B1 to the right of the button B2 on the line M2 parallel to the line M1, the component force Fx of the attractive force F provided to the operating portion 22 in the x-axis direction can moderately change before and after the mid-position Y-Y between the two buttons B1 and B2. Therefore, the operational sensation of the operating portion 22 can be improved. Additionally, in the force-feedback input device according to the embodiment, as can be seen from the comparison between Figs. 14B and 7B, the component force Fy of the attractive force F in the y-axis direction remains non-zero at the mid-position Y-Y between the two buttons B1 and B2 when the cursor C moves from the left of the button B1 to the right of the button B2 on the line M2 and, thus, the component force Fy can moderately change before and after the mid-position Y-Y between the two buttons B1 and B2. Therefore, the operation of the operating portion 22 becomes more stable and the operational sensation of the operating portion 22 can be improved. In this embodiment, the rate of decrease of Fx is 1, while the rate of decrease of Fy is 0 at the mid-position.

In this embodiment, the driving of the first and second external-force generation portions 23 and 24 is controlled so that the component force Fy of the attractive force F in the y-axis direction is not decreased. The spirit of the present invention is not limited thereto. The component force Fy may be slightly decreased. Conversely, the component force Fy may be slightly increased as the cursor C moves closer to the mid-position.

A distance L between the current position of the cursor C and the center of each of the buttons B1 to Bn displayed on the display means 1 is given by the following equation:

$$L = \sqrt{[(x-x1)^2+(y-y1)^2]},$$

where the coordinates of the current position of the cursor C is (x, y) and the center of each of the buttons B1 to Bn displayed on the display means 1 is (x1, y1).

Additionally, the component force Fx of the attractive force Fmax in the x-axis direction generated by the first external-force generation portion 23 and the component force Fy of the attractive force Fmax in the y-axis direction generated by the second external-force generation portion 24 are given by the following equations:

$$Fx = -\cos\theta \times Fmax$$
$$Fy = -\sin\theta \times Fmax$$
$$\cos\theta = (x-x1)/L$$
$$\sin\theta = (y-y1)/L,$$

where θ is a slope angle of the attractive force Fmax with respect to the x-axis of the display means 1.

As described above, when a plurality of the buttons B1 to Bn is displayed on the display means 1, the force-feedback input device according to the embodiment controls driving of the first and second external-force generation portions 23 and 24 so that the direction of the attractive force F exerted on the operating portion 22 is biased towards the mid-point O between the two adjacent buttons B1 and B2 as the cursor C moves closer to the mid-position Y-Y between the two adjacent buttons B1 and B2. Consequently, the component force Fx of the attractive force F, whose direction is the same as the moving direction of the cursor C, can be decreased as the cursor C moves closer to the mid-position Y-Y between the adjacent buttons B1 and B2, and therefore, the component force Fx can moderately change at the mid-position Y-Y between the two buttons B1 and B2. As a result, the impact force provided to the operating portion 22 can be reduced and the operational sensation of the operating portion 22 can be improved. In addition, the component force Fy, whose direction is orthogonal to the moving direction of the cursor C, remains non-zero even at the mid-position Y-Y between the two adjacent buttons B1 and B2. Accordingly, when the cursor C moves on the line M2 parallel to the line M1 between the centers of the adjacent buttons B1 and B2 by operating the operating portion 22, the component force Fy, whose direction is orthogonal to the moving direction of the cursor C, can moderately change, thus increasing the operational stability of the operating portion 22 and improving the operational sensation of the operating portion 22.

Additionally, the force-feedback input device according to the embodiment has no attractive areas of the cursor C around respective buttons B1 to Bn. When the cursor C moves to a position other than the centers of the buttons B1 to Bn, the operating portion 22 is provided with an attractive force towards the center of the button displayed at a position closest to the cursor C at all times. Consequently, the cursor C can be stably held at the center of one of the buttons displayed on the display means 1 at all times without holding the operating portion 22, thereby facilitating the operation of the cursor C by the operating portion 22 and improving the operability of the force-feedback input device.

In the above-described embodiment, two buttons B1 and B2 are arranged along the x-axis direction of the display means 1. However, in the case where two buttons B1 and B2 are arranged along the y-axis direction of the display means 1 or are arranged at an angle with respect to the x-axis and y-axis directions, driving of the first and second external-force generation portions 23 and 24 can be controlled in the same manner.

In addition, in the above-described embodiment, no attractive areas of the cursor C are arranged around the buttons B1 to Bn and, when the cursor C is moved to a position other than the centers of the buttons B1 to Bn, the operating portion 22 is provided with an attractive force towards the center of the button displayed at a position closest to the cursor C at all times. However, as shown in Fig. 8, attractive areas A1 to An of the cursor C may be arranged around the buttons B1 to Bn, and only when the cursor C is moved into the attractive areas, the first and second external-force generation portions 23 and 24 may be controlled so that the operating portion 22 is provided with an attractive force towards the center of the button displayed at a position closest to the cursor C.

According to this configuration, when the cursor C is moved on the display means 1 for purposes other than selecting a button, no attractive force of the cursor C is exerted on the operating portion 22. Consequently, the operating portion 22 can be operated lightly, and the operability of the force-feedback input device can be improved. Also, since it is not required that the attractive force of the cursor C is generated at all times, the power consumption of the first and second external-force generation portions 23 and 24 can be reduced.

Furthermore, although the force-feedback input device includes the operating portion 22 of a joystick type in the above-described embodiment, the present invention can be applied to a force-feedback input device of a mouse type.

**Claims**

1. A force-feedback input device comprising:

   display means for displaying a cursor, a first button, and a second button;
   an operating portion operated by an operator;
   a detecting portion for detecting an operational state of the operating portion;
   external-force generation portions for providing the operating portion with an attractive force composed of a first external force in the direction substantially parallel to the arrangement direction of the first and second buttons and a second external force in the direction substantially orthogonal to the arrangement direction of the first and second buttons; and
   control means for controlling the display of the cursor based on a detection signal from the detecting portion and for controlling driving of the external-force generation portions so as to provide the operating portion with the attractive force to the buttons based on the positional relationship between the cursor and the buttons;

   wherein the control means controls driving of the external-force generation portions such that the attractive force decreases while the rate of decrease of the second external force becomes smaller than the rate of decrease of the first external force as the distance between the cursor and a borderline between a first attractive area and a second attractive area appearing in the vicinities of the adjacent first and second buttons becomes smaller.

2. The force-feedback input device according to Claim 1, wherein the control means decreases only the first external force as the distance between the borderline and the cursor decreases.

FIG. 1

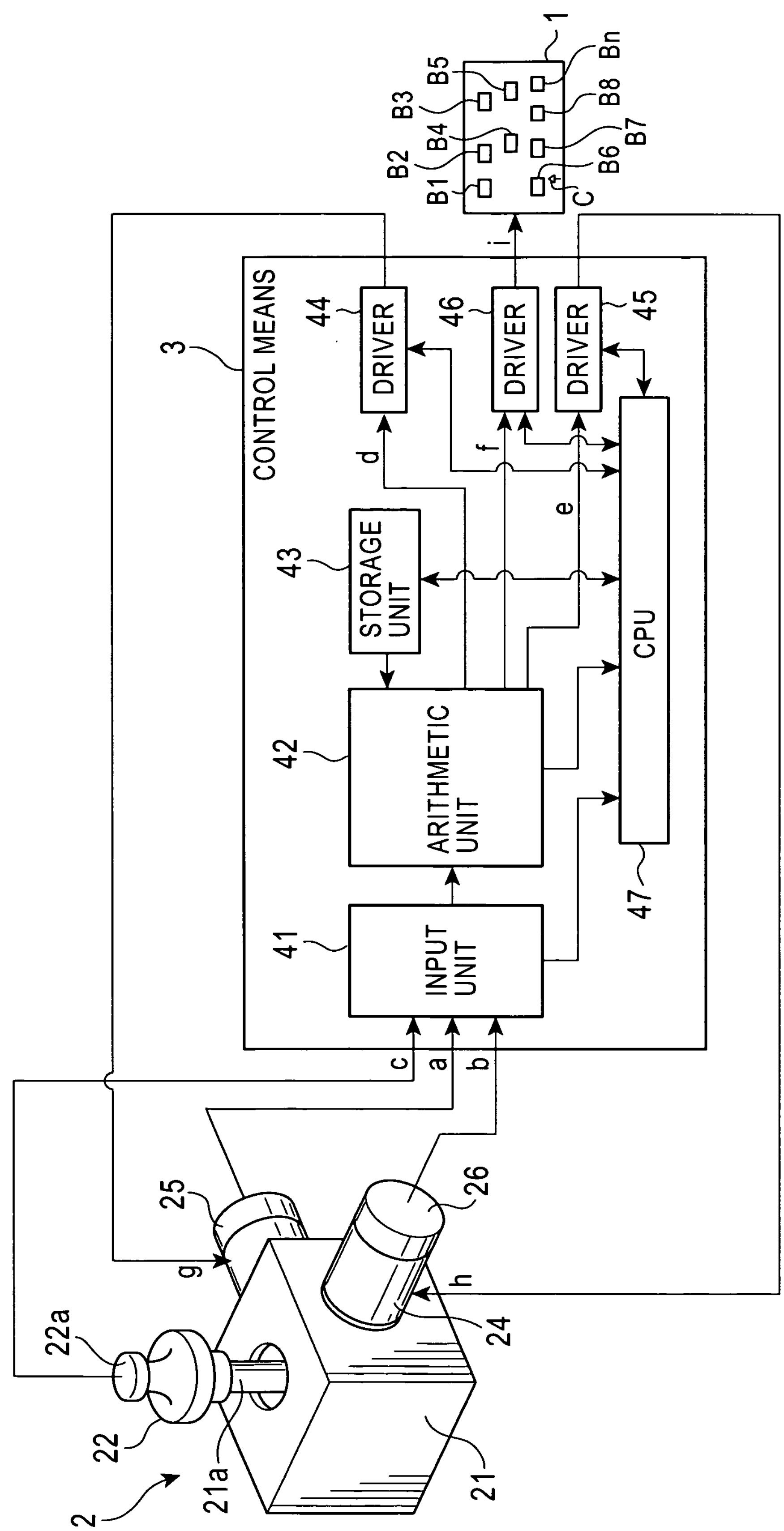
CONTROL MEANS
3
INPUT UNIT
41
ARITHMETIC UNIT
42
STORAGE UNIT
43
DRIVER
44
DRIVER
46
DRIVER
45
CPU
47
d
e
f
i
a
b
c
g
h
1
B1
B2
B3
B4
B5
B6
B7
B8
Bn
C
2
21
21a
22
22a
24
25
26

FIG. 2

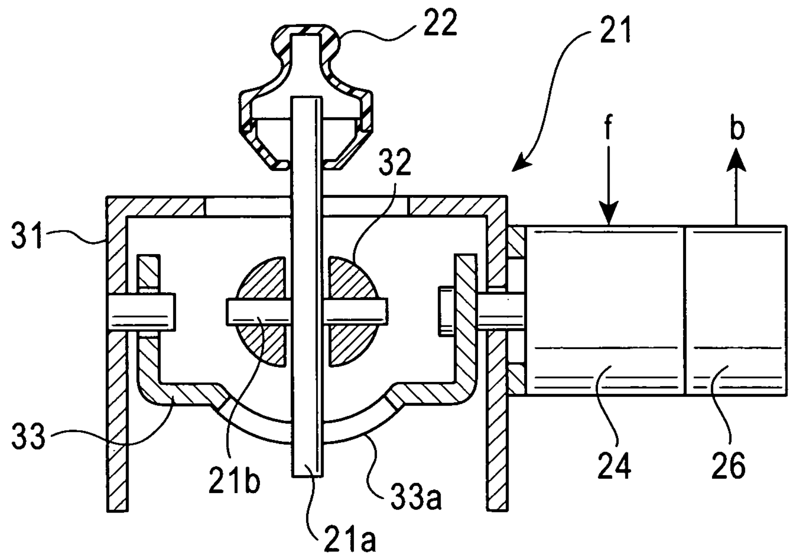
22
21
f
b
32
31
33
21b
21a
33a
24
26

FIG. 3

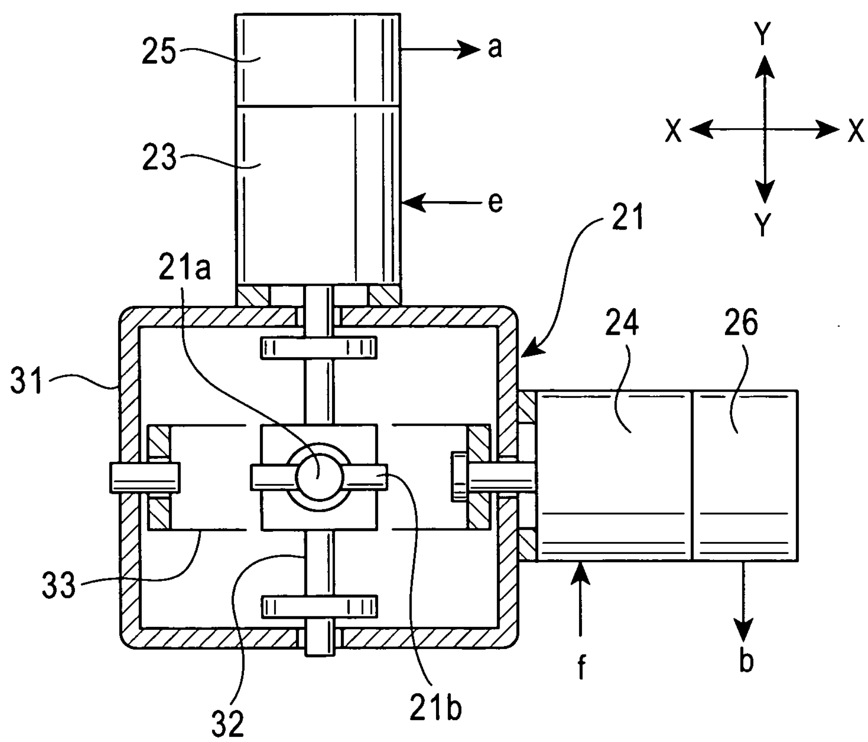
25
a
23
e
Y
X
X
Y
21
21a
24
26
31
33
f
b
32
21b

FIG. 4A

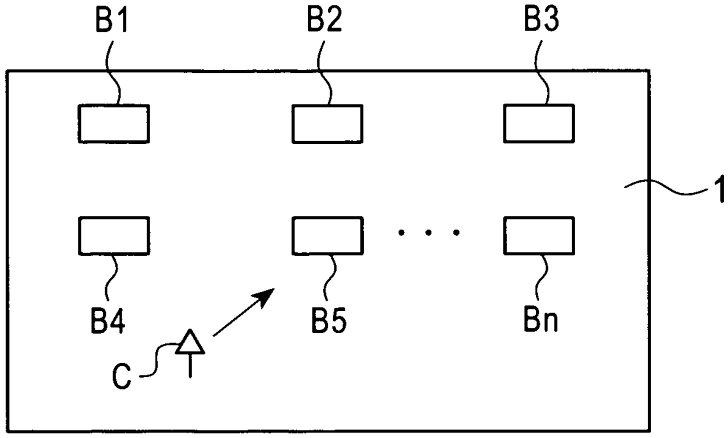


FIG. 4B

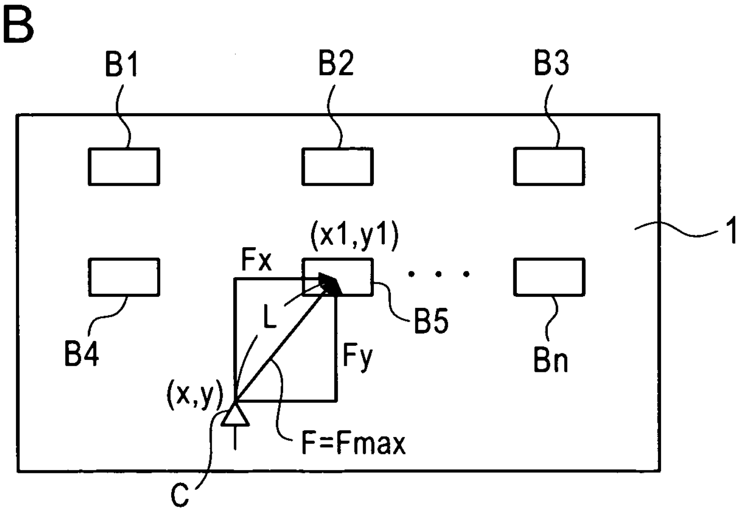


FIG. 4C

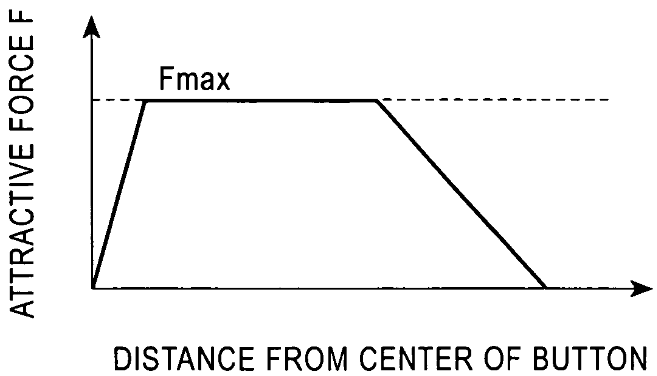

FIG. 5

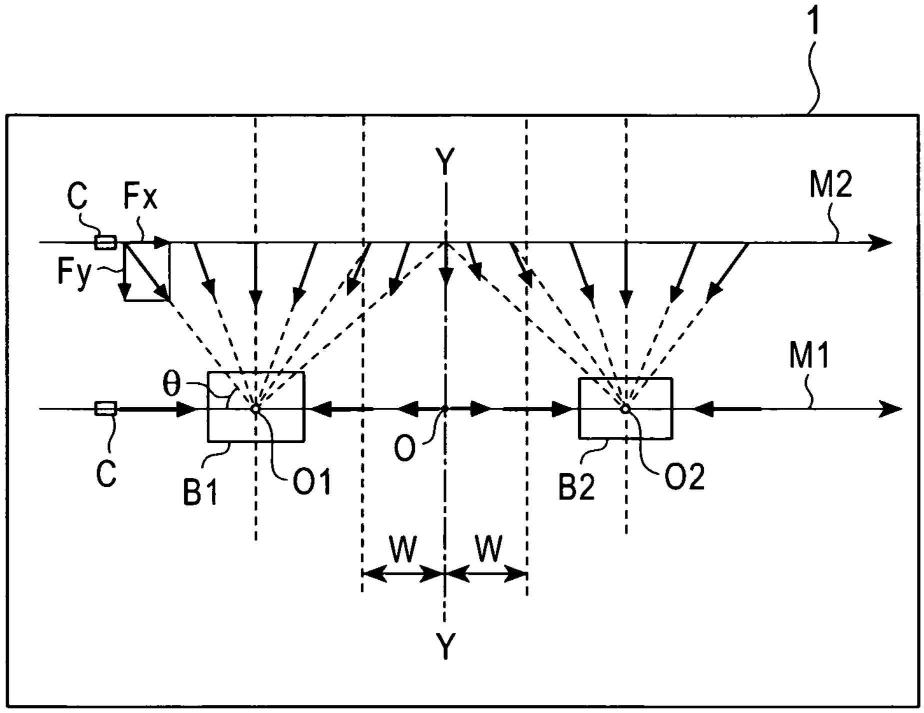
1
Y
C
Fx
M2
Fy
θ
M1
C
B1
O1
O
B2
O2
W
W
Y

FIG. 6

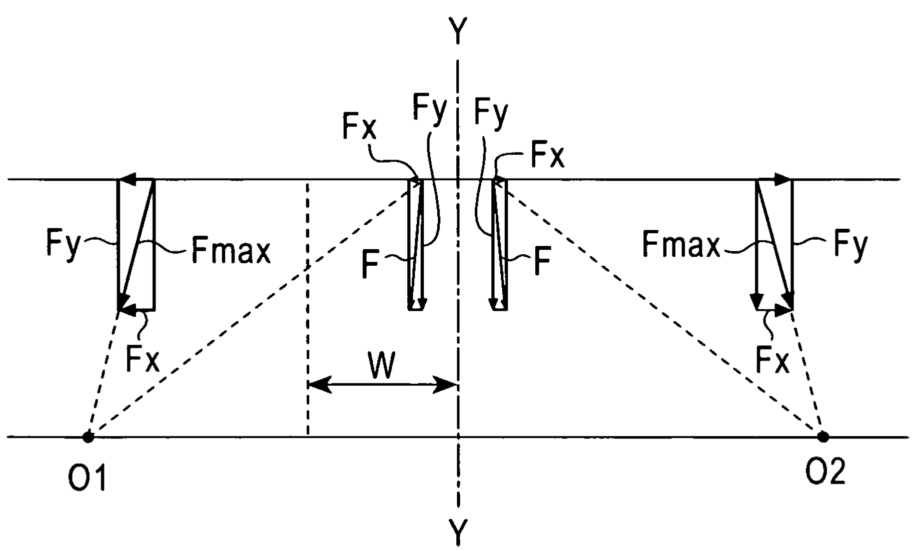
Y
Fx
Fy
Fy
Fx
Fy
Fmax
F
F
Fmax
Fy
Fx
W
Fx
O1
O2
Y

# FIG. 7A

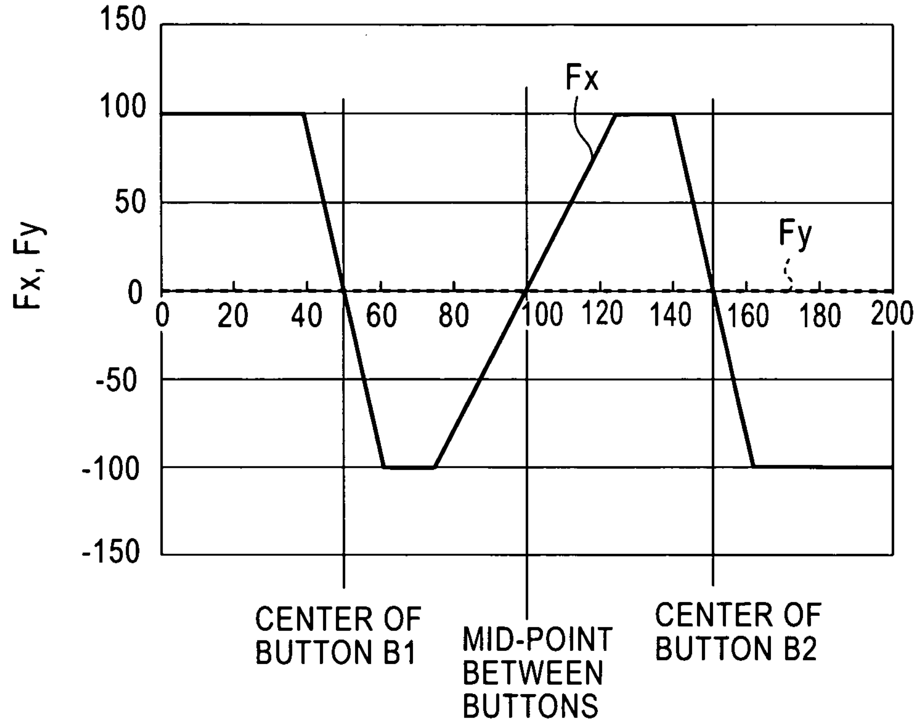

150
100
50
0
-50
-100
-150
Fx, Fy
0
20
40
60
80
100
120
140
160
180
200
Fx
Fy
CENTER OF BUTTON B1
MID-POINT BETWEEN BUTTONS
CENTER OF BUTTON B2


# FIG. 7B

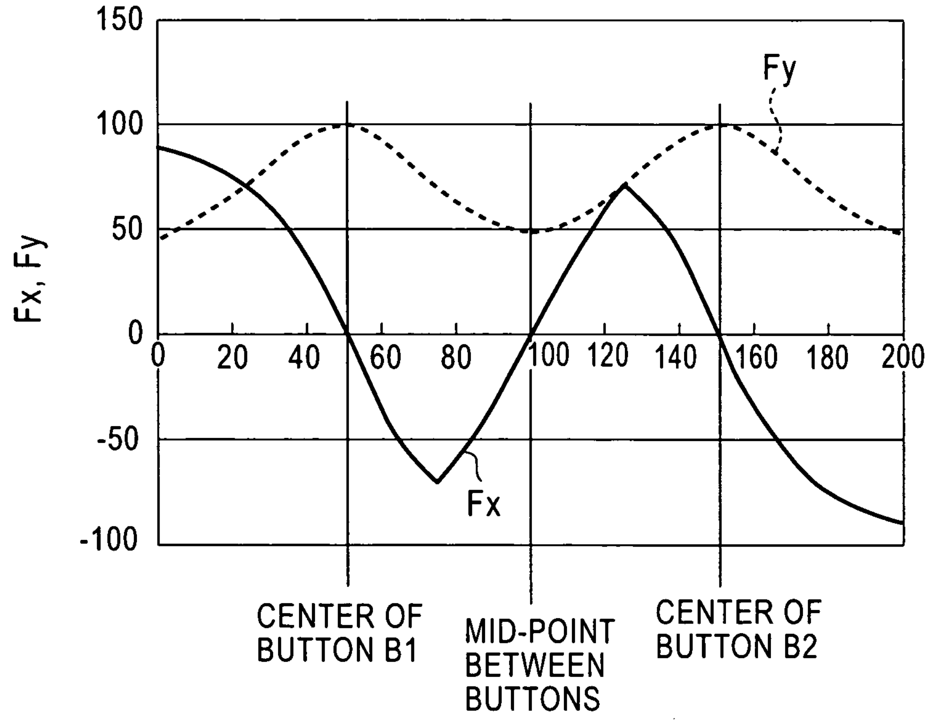

150
100
50
0
-50
-100
Fx, Fy
0
20
40
60
80
100
120
140
160
180
200
Fy
Fx
CENTER OF BUTTON B1
MID-POINT BETWEEN BUTTONS
CENTER OF BUTTON B2

FIG. 8

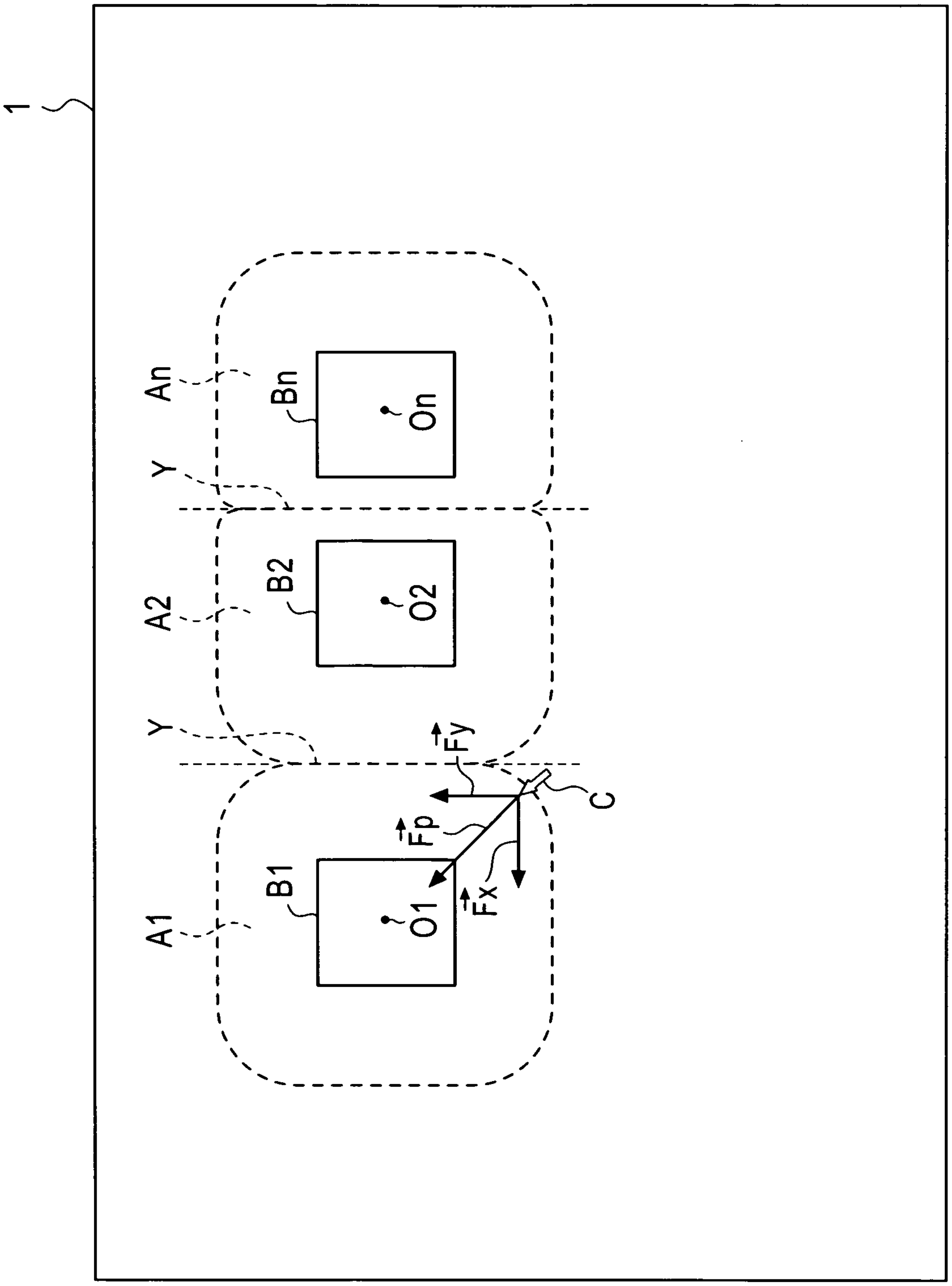

FIG. 9
PRIOR ART

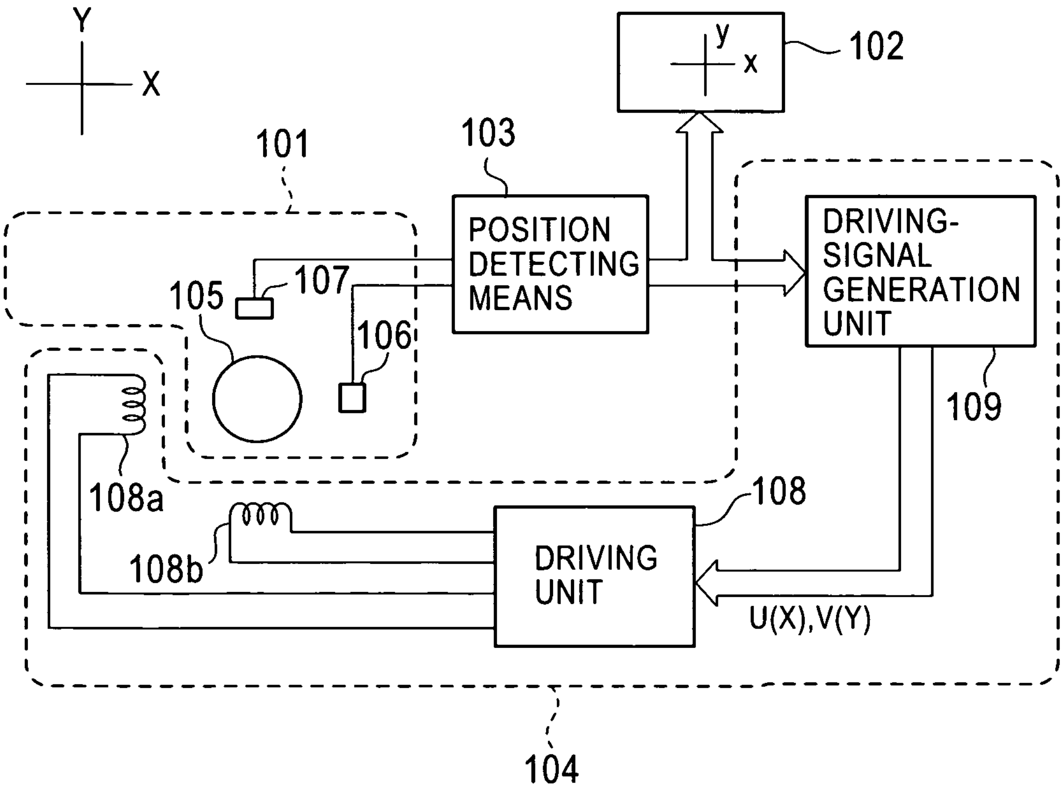

FIG. 10A
PRIOR ART

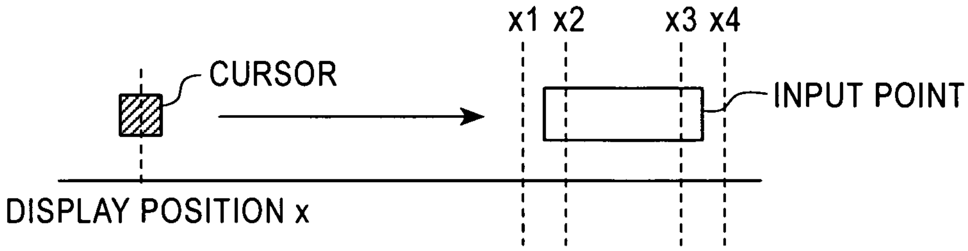


FIG. 10B
PRIOR ART

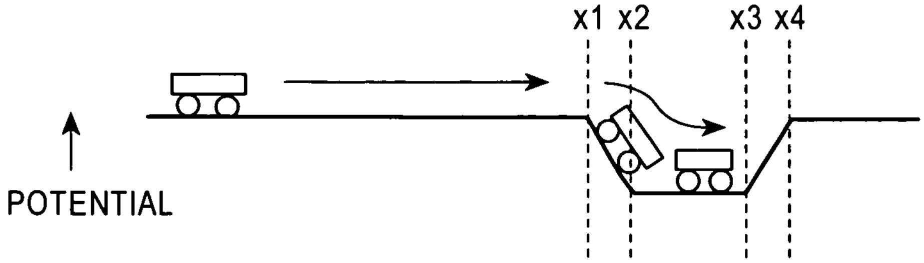


FIG. 10C
PRIOR ART

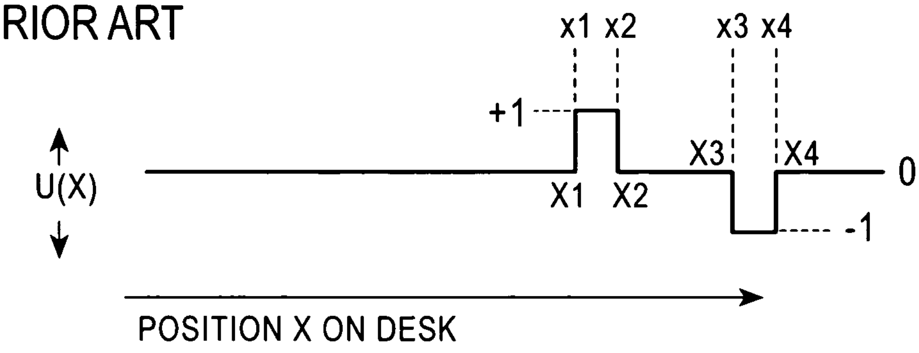

FIG. 11

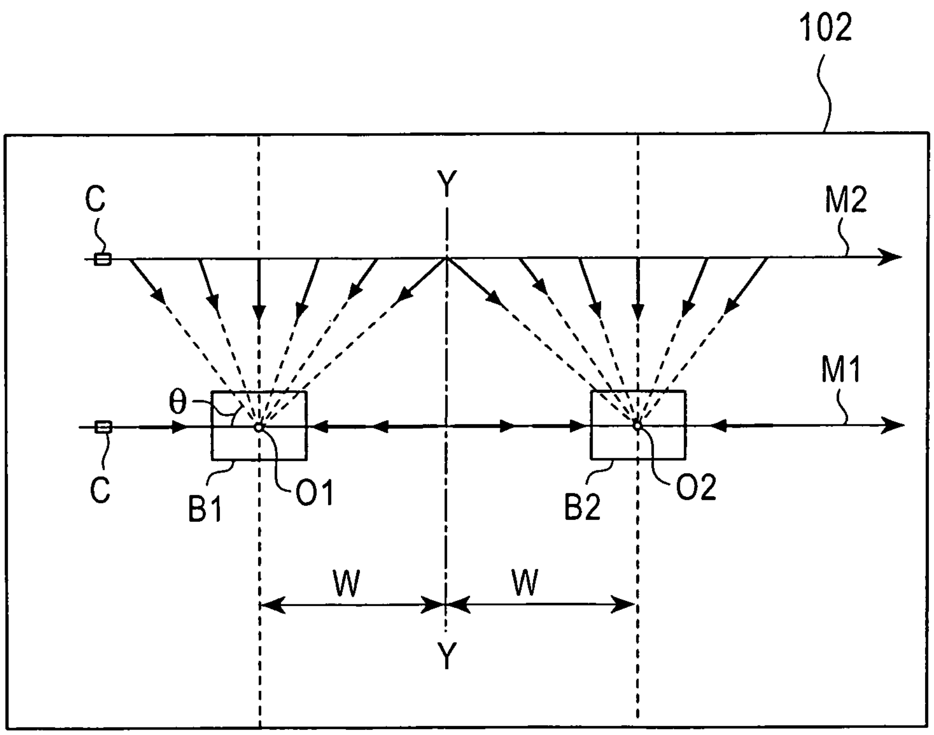

FIG. 12A

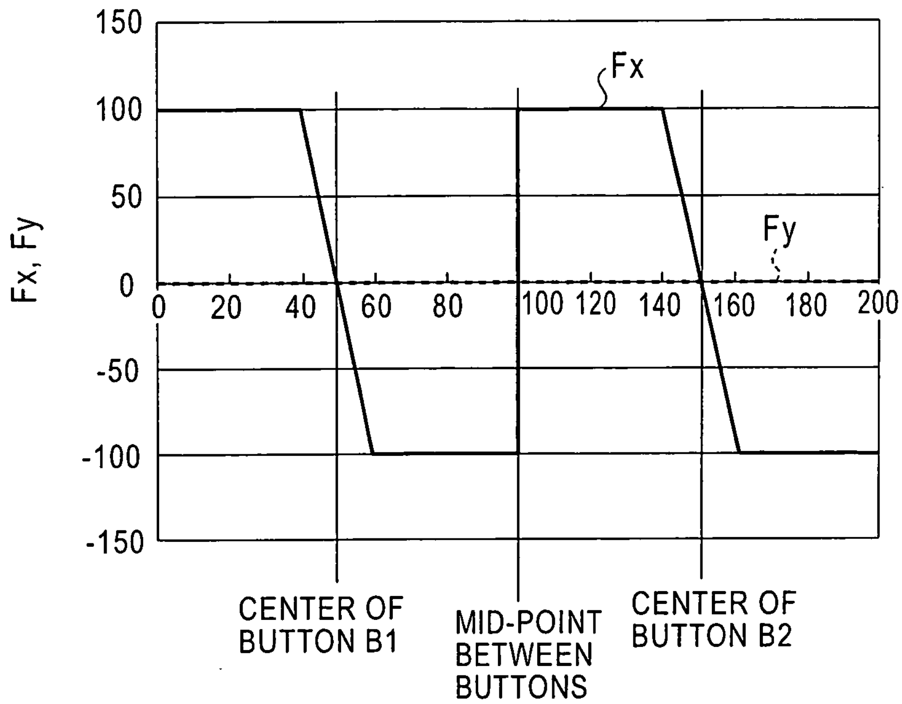


FIG. 12B

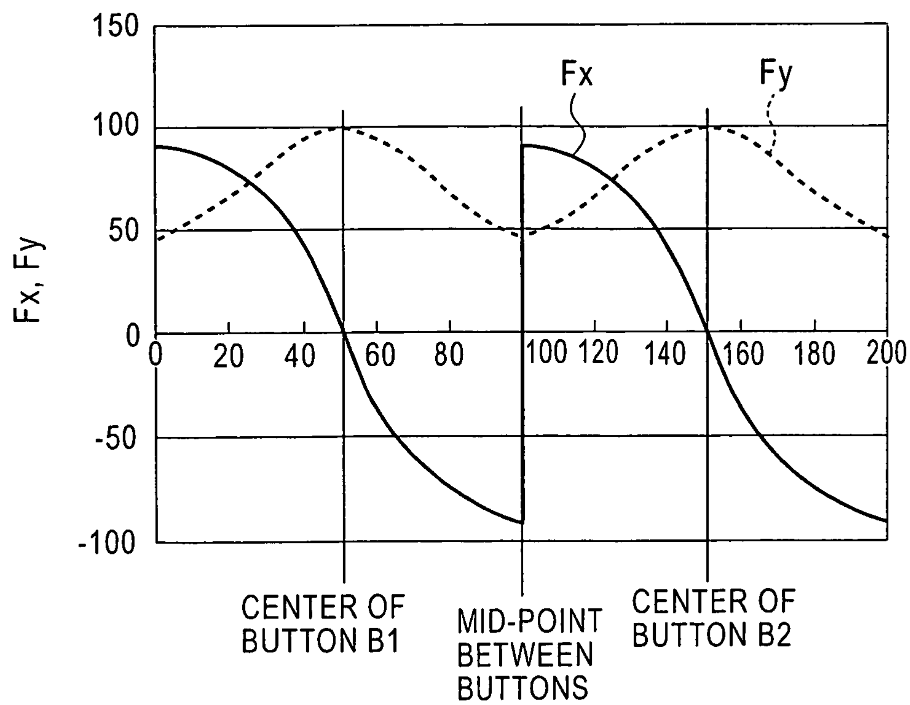

FIG. 13

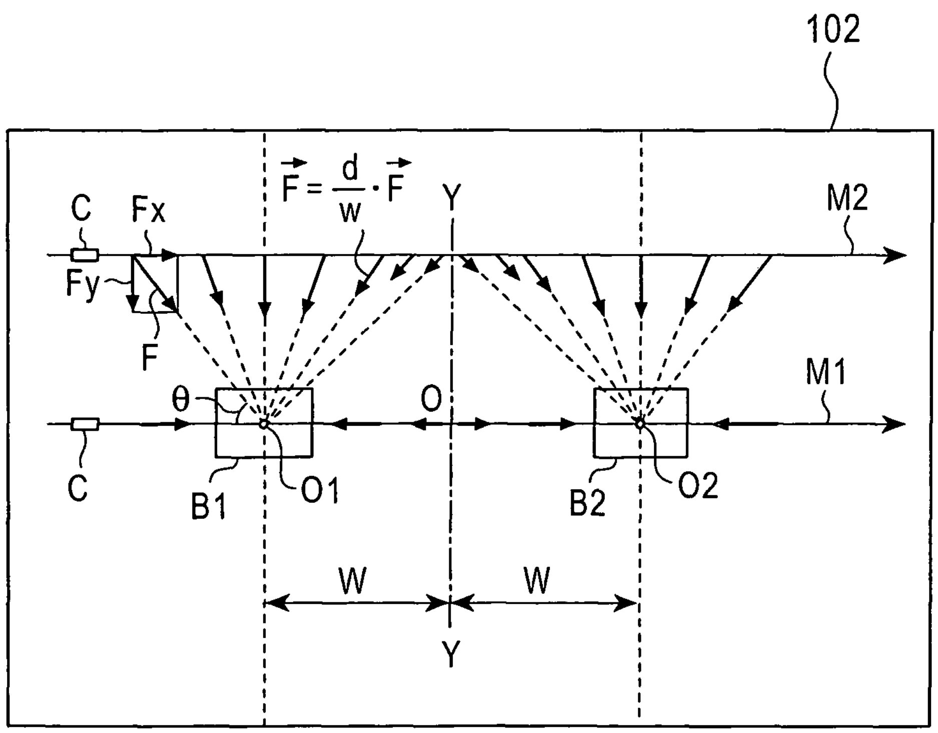

FIG. 14A

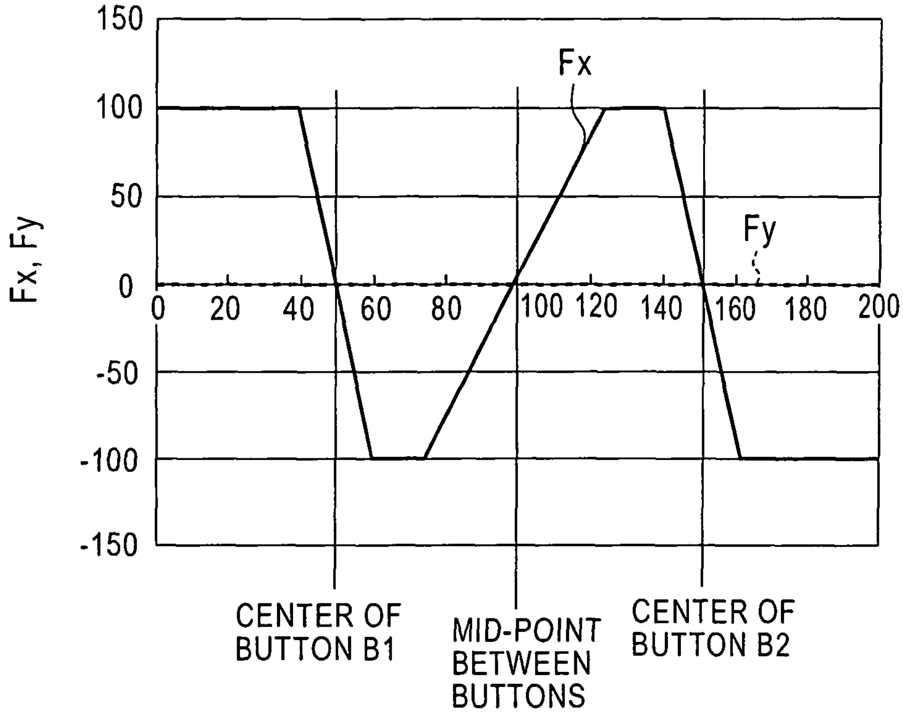


FIG. 14B

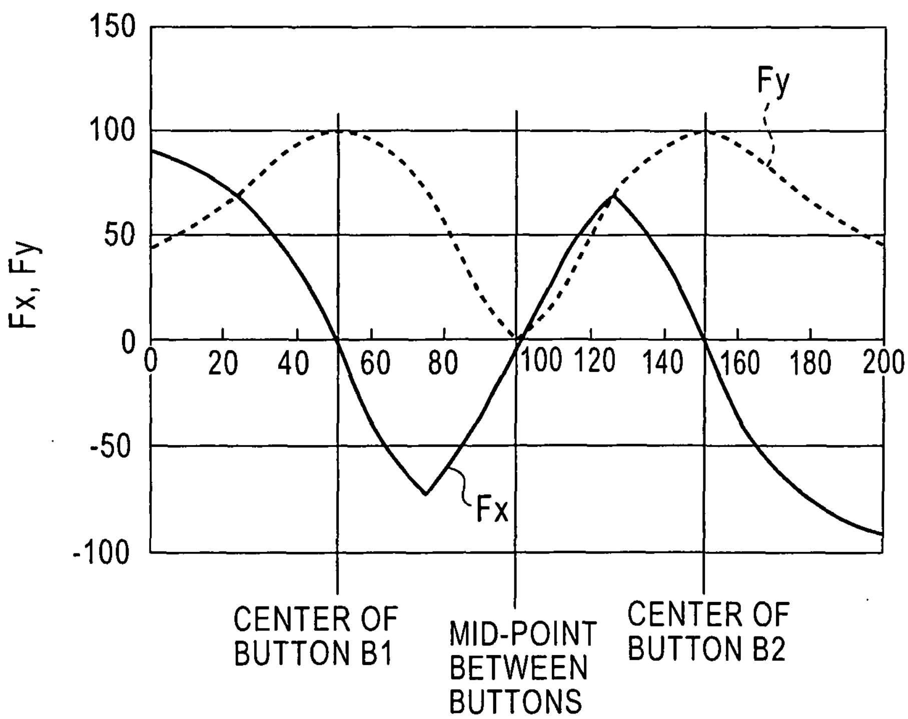

European Patent Office

# EUROPEAN SEARCH REPORT

Application Number
EP 04 02 6588

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 219 032 B1 (ROSENBERG LOUIS B ET AL) 17 April 2001 (2001-04-17)<br>* column 38, line 38 - column 39, line 9 *<br>* column 49, line 58 - column 50, line 52; figures 1,6,18 *<br>----- | 1,2 | G06F3/00 |

TECHNICAL FIELDS SEARCHED (Int.Cl.7)
G06F

The present search report has been drawn up for all claims

1

| Place of search | Date of completion of the search | Examiner |
|---|---|---|
| Berlin | 3 February 2005 | Mouton, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 02 6588

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2005

| Patent document cited in search report | Publication date | Patent family member(s) | Publication date |
|---|---|---|---|
| US 6219032 B1 | 17-04-2001 | US 5734373 A | 31-03-1998 |
| | | CA 2239125 A1 | 12-06-1997 |
| | | EP 0864144 A2 | 16-09-1998 |
| | | WO 9721160 A2 | 12-06-1997 |
| | | US 2002109668 A1 | 15-08-2002 |
| | | US 2002138562 A1 | 26-09-2002 |
| | | US 6101530 A | 08-08-2000 |
| | | US 6161126 A | 12-12-2000 |
| | | US 6366272 B1 | 02-04-2002 |
| | | US 6317116 B1 | 13-11-2001 |
| | | US 6353850 B1 | 05-03-2002 |
| | | US 6028593 A | 22-02-2000 |
| | | US 5956484 A | 21-09-1999 |
| | | US 2001002126 A1 | 31-05-2001 |
| | | US 6078308 A | 20-06-2000 |
| | | US 2002021283 A1 | 21-02-2002 |
| | | US 2002050978 A1 | 02-05-2002 |
| | | CA 2233136 A1 | 03-04-1997 |
| | | EP 0852789 A1 | 15-07-1998 |
| | | JP 11514469 T | 07-12-1999 |
| | | US 6271833 B1 | 07-08-2001 |
| | | US 6219033 B1 | 17-04-2001 |
| | | US 2002126091 A1 | 12-09-2002 |
| | | WO 9712357 A1 | 03-04-1997 |
| | | US 6348911 B1 | 19-02-2002 |
| | | US 6278439 B1 | 21-08-2001 |
| | | US 6661403 B1 | 09-12-2003 |
| | | US 5691898 A | 25-11-1997 |
| | | US 2004113932 A1 | 17-06-2004 |
| | | US 2002054021 A1 | 09-05-2002 |
| | | US 5959613 A | 28-09-1999 |
| | | US 2004160415 A1 | 19-08-2004 |
| | | US 2001030658 A1 | 18-10-2001 |
| | | US 5907487 A | 25-05-1999 |
| | | US 5929607 A | 27-07-1999 |
| | | US 6147674 A | 14-11-2000 |
| | | US 6169540 B1 | 02-01-2001 |

EPO FORM P0459

For more details about this annex : see Official Journal of the European Patent Office, No. 12/82